# EUROPÄISCHE PATENTSCHRIFT

(11) **EP 3 669 030 B1**
(45) Veröffentlichungstag und Bekanntmachung des Hinweises auf die Patenterteilung: **29.09.2021**
(21) Anmeldenummer: 18755470.4
(22) Anmeldetag: 15.08.2018
(51) Int. Cl.: E02F 3/24, E02F 3/26, E02F 9/26, E02F 9/28, G01B 11/00, G01B 11/24

(54) **SYSTEM ZUR BESTIMMUNG DES VERSCHLEISSES ABTRAGENDER ELEMENTE AN EINEM SCHAUFELRADGERÄT**
SYSTEM FOR DETERMINING THE WEAR OF MATERIAL-REMOVING ELEMENTS ON A BUCKET WHEEL DEVICE
SYSTÈME DE DÉTERMINATION DE L'USURE D'ÉLÉMENTS ABRASIFS SUR UN APPAREIL À ROUE À AUBES

(30) Priorität: 18.08.2017 DE 102017118914
(43) Veröffentlichungstag der Anmeldung: 24.06.2020
(73) Patentinhaber: thyssenkrupp Industrial Solutions AG, 45143 Essen (DE); thyssenkrupp AG, 45143 Essen (DE)
(72) Erfinder: RAAZ, Viktor, 44869 Bochum (DE); KREX, Martin, 46236 Bottrop (DE); WINKEL, Reik, 52072 Aachen (DE)
(74) Vertreter: thyssenkrupp Intellectual Property GmbH
(86) Internationale Anmeldenummer: PCT/EP2018/072122
(87) Internationale Veröffentlichungsnummer: WO 2019/034691

(56) Entgegenhaltungen:
- EP-A1- 2 508 676
- EP-A2- 2 161 375
- AU-B2- 2006 254 651
- DE-A1- 10 015 005
- DE-A1- 19 528 376
- US-A1- 2005 261 799
- US-A1- 2015 085 123
- US-A1- 2017 356 165

## Beschreibung

Die Erfindung betrifft ein System zur Bestimmung des Verschleißes abtragender Elemente, die an den Schaufeln eines Schaufelrades eines Schaufelradgerätes angeordnet sind. Ferner betrifft die Erfindung ein Verfahren zur Bestimmung eines derartigen Verschleißes. Schaufelradgeräte im Sinne der vorliegenden Erfindung betreffen dabei konventionelle Schaufelradbagger oder Schaufelradgeräte, die zur Materialförderung beispielsweise auf oder von einer Halde geeignet sind, wobei auch beispielsweise sogenannte Schaufelrad-Reclaimer mit umfasst sind.

### STAND DER TECHNIK

Beispielweise beschreibt die DE 10 2015 122 372 A1 ein System zur Bestimmung des Verschleißes an den aktiven Elementen einer Zerkleinerungsmaschine, dargestellt am Beispiel eines Brechers. Hierzu wird eine Radarantenne im ruhenden Gehäuse des Brechers angeordnet und es kann ein Abstand zu einer Verschleißschicht an den aktiven Elementen des Brechkegels bestimmt werden. Schreitet der Verschleiß der Verschleißschicht insbesondere durch Abrasion voran, vergrößert sich der Abstand, welcher mit dem Radar gemessen werden kann. Der Vorteil einer solchen Messung basierend auf einem Radar besteht in der Möglichkeit, die Messung auch während des Betriebs eines Brechers auszuführen, der Brecher muss folglich nicht stillgelegt oder in einem Sonderlauf betrieben werden.

Eine andere Form einer Verschleißmessung von abtragenden Elementen ergibt sich aus der US 2010/0142759 A1 und basierend auf einer Kameratechnik und einer anschließenden Bildauswertung können die Zähne eines Becherförderers auf ihren Verschleißzustand hin untersucht werden. Eine solche Auswertung des Verschleißzustandes ist jedoch nicht bei rotatorisch bewegten abtragenden Elementen möglich, da eine Bildauswertung dann nicht mehr hinreichend genau möglich ist. Vielmehr besteht die Möglichkeit, beispielsweise das Fehlen eines abtragenden Elementes, also beispielsweise eines Zahnes an einer Schaufel, zu detektieren. Derartige Systeme sind insbesondere auch von dem Hersteller "Motion Metrics International Corp." bekannt.

Aus der AU 2006254651 B2 ist ein System zur Detektion der Notwendigkeit des Austausches eines Baggerzahns bekannt.

Aus der US 2017/0356165 A1 ist ein Verschleißindikator für Verschleißteile einer Maschine bekannt.

Aus der US 2015/0085123 A1 ist ein Verfahren und eine Vorrichtung zur Zustandsüberwachung von schwerem Gerät bekannt.

Aus der EP 2 508 676 A1 ist ein Walzengehäuse mit einer Inspektionsöffnung bekannt.

Aus der EP 2 161 375 A2 ist ein Verfahren zur Bestimmung des Verschleißzustandes bekannt.

Aus der DE 195 28 376 A1 ist ein Verfahren zur berührungslosen Vermessung eines rotierenden Werkzeuges bekannt.

Aus der US 2005/0261799 A1 ist ein Verfahren und eine Vorrichtung zur Detektion einer Veränderung in einem Werkzeug bekannt.

Aus der DE 100 15 005 A1 ist eine Einrichtung zum Messen des Verschleißes beim Spanen von abrasiven Materialien bekannt.

### OFFENBARUNG DER ERFINDUNG

Aufgabe der Erfindung ist die Qualifizierung eines Systems zur Bestimmung des Verschleißes eines abtragenden Elementes, insbesondere eines Zahnes, an den Schaufeln eines Schaufelrades eines Schaufelradgerätes. Eine Bestimmung des Verschleißes soll dabei auch während des Betriebs des Schaufelradgerätes möglich sein. Insbesondere ist es die Aufgabe, ein System so auszubilden, das verschlissene abtragende Elemente an den Schaufeln eines Schaufelradgerätes identifizieren und in einem Speicher vormerken kann, sodass diese im Rahmen einer Wartung gezielt ausgetauscht werden können.

Diese Aufgabe wird ausgehend einem System gemäß Anspruch 1 in Verbindung mit den kennzeichnenden Merkmalen gelöst. Weiterhin wird diese Aufgabe in Verbindung mit einem Verfahren gemäß Anspruch 12 gelöst. Vorteilhafte Weiterbildungen der Erfindung sind in den jeweils abhängigen Ansprüchen angegeben.

Die Erfindung schlägt zur Lösung der Aufgabe ein System zur Bestimmung des Verschleißes eines abtragenden Elementes an den Schaufeln eines Schaufelrades eines Schaufelradgerätes vor, umfassend wenigstens eine ruhend am Schaufelradgerät angeordnete Aufnahmeeinheit, mit der Messsignale aussendbar und/oder empfangbar sind und mit welchem der Verschleiß der abtragenden Elemente während einer Bewegung der abtragenden Elemente im Betrieb messbar ist.

Kern der Erfindung ist die Anwendung einer Aufnahmeeinheit zur Aussendung und zum Empfang von Messsignalen, mit denen der Verschleiß der abtragenden Elemente an den Schaufeln des Schaufelrades gemessen werden, wobei erfindungsgemäß die Messung während des Betriebs des Schaufelrades des Schaufelradgerätes erfolgt. Die abtragenden Elemente, insbesondere also die Zähne, mit denen die Schaufeln des Schaufelrades bestückt sind, bewegen sich auf einer Kreisbahn an der Aufnahmeeinheit vorbei und die Aufnahmeeinheit ist erfindungsgemäß so ausgeführt, dass auch ohne einen ruhenden Zustand und insbesondere ohne eine Linearbewegung der abtragenden Elemente der Verschleißzustand derselben gemessen werden kann. Hierfür ist es entscheidend, dass die Aufnahmeeinheit ruhend am Schaufelradgerät angeordnet wird und die Anordnung erfolgt in der Weise, dass die Messsignale einen Abstand der abtragenden Elemente zur Aufnahmeeinheit messen. Dieser Abstand gibt eine Information über den Verschleißzustand der abtragenden Elemente, sodass diese Information abgeleitet und beispielsweise gespeichert werden kann, um im Rahmen einer folgenden Servicetätigkeit die als verschlissen identifizierten abtragenden Elemente zu erneuern. Der Verschleiß eines abtragenden Elementes ist dabei im Sinne der vorliegenden Erfindung auch gleichzusetzen mit dem Verlust eines solchen abtragenden Elementes, welcher ebenfalls mit einer Aufnahmeeinheit gemäß der Erfindung ermittelt werden kann.

Mit besonderem Vorteil umfasst die Aufnahmeeinheit wenigstens eine Kamera, mit der ein Film und/oder diskrete Licht- und/oder Wärmebilder der Schaufel und/oder der abtragenden Elemente erzeugbar sind. Beispielsweise kann ein Film aufgenommen und damit ein Stream bereitgestellt werden und aus dem Film können diskrete Lichtbilder oder auch Wärmebilder extrahiert werden, in denen die einzelnen Schaufeln mit den abtragenden Elementen erkennbar sind.

Insbesondere sieht hierbei die Erfindung vor, dass die Aufnahmeeinheit des Weiteren wenigstens einen Abstandssensor umfasst, mit dem ein minimaler Abstand zwischen dem sich am nächsten zum Abstandssensor befindlichen abtragenden Element aus einer Elementenreihe am Schaufelrad und dem Abstandssensor messbar ist. Die Elementreihen werden gebildet durch die mehreren abtragenden Elemente, die auf den einzelnen Schaufeln in jeweils gleicher Position angeordnet sind. Da die Schaufeln in der Regel mit mehreren nebeneinander angeordneten abtragenden Elementen, beispielsweise Zähnen, ausgebildet sind, ergeben sich auch mehrere nebeneinander und parallel zueinander angeordnete Elemtenreihen, wobei mit einem Abstandssensor vorteilhaft die mehreren eine Elementenreihe bildenden abtragenden Elemente gemessen werden können. Folgerichtig ist damit eine Anzahl von Abstandssensoren in der an der Aufnahmeeinheit nebeneinander angeordnet, wobei die Anzahl abhängt von der Anzahl der Elementenreihen. Damit kann die Aufnahmeeinheit mehrere Abstandssensoren und insbesondere mehrere Radare aufweisen, die jeweils auf eine entsprechende Elementreihe ausgerichtet sind, wobei das Vorhandensein nur einer Kamera hinreichen sein kann, um die jeweilige Schaufel zu identifizieren.

Die Aufnahmeeinheit kann weiterhin wenigstens ein Radar oder wenigstens eine Radarantenne umfassen. Dabei kann das Radar den Abstandssensor bilden. Alternativ kann der Abstandssensor auch beispielsweise mittels eines Ultraschallsensors gebildet werden, mit dem der minimale Abstand messbar ist.

Mit besonderem Vorteil weist eine Aufnahmeeinheit genau eine Kamera und mehrere Radare auf. Auch ist es denkbar, dass eine Aufnahmeeinheit eine Kamera und eine oder mehrere Wärmebildkameras, Lasersensoren oder Ultraschallsensoren aufweist. Im Vordergrund steht dabei die Ausbildung einer Aufnahmeeinheit mit wenigstens einer Kamera, die gekoppelt wird mit einem Messsignale aussendenden Mittel, wobei das die Messsignale aussendende Mittel lediglich besonders vorteilhaft als ein Radar ausgebildet ist. Ein Radar als Bestandteil der Aufnahmeeinheit kann dabei auch bereits durch eine Radarantenne gebildet sein, wobei eine Radareinheit zur Erzeugung der Radarsignale nicht in baulicher Einheit mit der Aufnahmeeinheit ausgeführt sein muss, dies jedoch vorteilhafterweise sein kann.

Zur Anordnung der Aufnahmeeinheit ist es weiterhin von Vorteil, dass die Ausbreitungsrichtung der Messsignale zu einer Verschleißebene an dem gemessenen abtragenden Element eine Flächennormale bildet, sodass die Abstandssensoren entweder senkrecht oder angeschrägt auf eine Rotationsachse des Schaufelrades hin weisend ausgerichtet sind. Dabei wird ein minimaler Abstand zwischen den abtragenden Elementen und den Abstandssensoren erzeugt, der durch die Abstandssensoren gemessen werden kann, und vergrößert sich dieser minimale Abstand, so liegt ein Verschleiß der abtragenden Elemente vor.

Das Schaufelradgerät weist insbesondere einen Auslegerarm auf, der zur Aufnahme des Schaufelrades dient, wobei die Aufnahmeeinheit mit besonderem Vorteil wenigstens mittelbar am Auslegerarm angeordnet ist. Beispielsweise weisen Auslegerarme ein Schutzschild auf, welches sich mit Bezug auf das Schaufelrad auf einer zum Gebirgsverband abgewandten Seite nahe am Schaufelrad befindet und an diesem Schutzschild kann beispielsweise die Aufnahmeeinheit angeordnet sein.

Erfindungsgemäß umfasst das System einen Drehgeber, mit dem die rotatorische Position des Schaufelrades erfassbar ist. Über den Drehgeber kann ein Signal bereitgestellt werden, welche Schaufel zu welchem Zeitpunkt an der Aufnahmeeinheit vorbeiläuft, sodass die entsprechende Schaufel über den Drehgeber identifiziert werden kann.

Die Aufnahmeeinheit dient damit zur Generierung eines Abbildes der zur überwachenden Schaufeln und den an den Schaufeln angeordneten abtragenden Elementen, insbesondere den Zähnen. Das Abbild wird mit der Kamera, vorzugsweise mittels einer Fotokamera, einer Wärmebildkamera, einer Radarsensorik, einer Ultraschallsensorik oder einer Lasersensorik erzeugt. Die Kombination aus der Kamera, insbesondere Fotokamera und dem Radar, alternativ jedoch auch einer Wärmebildkamera, einem Lasersensor oder einem Ultraschallsensor, ermöglicht das Erkennen eines Verschleißes des abtragenden Elementes unter gleichzeitiger Identifikation der Schaufel, an dem sich das gemessene Objekt befindet, nämlich das abtragende Element, insbesondere der Zahn. Zudem dient die Kamera, insbesondere die Fotokamera, der bildlichen Dokumentation des Zustandes des abtragenden Elementes, also beispielsweise des Zahnzustandes. Hingegen dienen die Wärmebildkamera, die Lasersensorik, die Ultraschallsensorik und insbesondere das Radar zur Bestimmung des Verschleißzustandes des abtragenden Elementes.

Aufgrund der für Schaufelradgeräte spezifischen Umweltbedingungen, insbesondere aufgrund von Staub, Regen, wechselnden Temperaturen und dergleichen, muss die Aufnahmeeinheit entsprechend geschützt werden. Beispielsweise kann die Aufnahmeeinheit über Stabilisatoren gegen Vibrationen geschützt werden, sodass die Aufnahmeeinheit beispielsweise über die Stabilisatoren an dem Auslegerarm angeordnet ist. Für die optischen Sensoren und Kameras müssen gegen Staub und Regen Reinigungssysteme wie beispielsweise Scheibenwischer, Druckluftdüsen und dergleichen eingesetzt werden. Diese Vorkehrungen sind insbesondere notwendig, da die Ausrichtung der Aufnahmeeinheit und damit die Aussendung der Radarstrahlen relativ nah am Schaufelrad erfolgen muss, beispielsweise mit einem Abstand von nur 1,5m bis 2m. Über diesen Abstand kann mit Radarstrahlen, die die Messsignale bilden, gemessen werden, ob das abtragende Element im Bereich der abtragenden Kontur wenige Millimeter weiter oder näher von der Aufnahmeeinheit und damit vom Radar entfernt ist. Um die Funktion des Systems sicherzustellen ist folglich die Ausrichtung der Aufnahmeeinheit wichtig, die annähernd radial zum Schaufelrad ausgebildet ist und so wird gewährleistet, dass die Zahnspitzen den kleinsten Abstand zu den Sensoren haben und die größere Radar-Reflexionsfläche bilden. Weiterhin muss der Radarsensor in der Lage sein, mit einer sehr hohen Messrate zu arbeiten, insbesondere beispielsweise 20Hz, bevorzugt mehr als 50 Hz, insbesondere bevorzugt 500 bis 2000 Hz. Weiterhin ist es von Vorteil, wenn das Radarsystem über eine hohe Frequenz, insbesondere mehr als 24 GHz verfügen kann, um eine hohe Strahlbündelung zu erreichen, sodass sich möglichst nur ein abtragendes Element in einem Entfernungsbereich befindet. Durch die Wahl einer möglichst hohen Radarbandbreite von mehr als 1 GHz erhöht sich die Zieldifferenzierungsfähigkeit, wodurch sich das Auflösungsvermögen ebenfalls erhöht. Weiterhin von Vorteil ist eine Frequenzmodulierung (FMCW), da bei einem Pulsradar nicht hinreichend kurze Pulse erzeugt und ausgewertet werden können.

Beispielsweise befinden sich an einer Schaufel 4 bis 12 abtragende Elemente, insbesondere Zähne. Für jeden Zahn pro Schaufel wird ein Radar zur separaten Erfassung des Verschleißzustandes vorgesehen, wobei die gesamte Schaufel selbst bereits mit nur einer Kamera erfasst werden kann. Daraus ergibt sich mit Vorteil die Ausgestaltung der Aufnahmeeinheit, eine Kamera mit mehreren Radar-Einheiten kombiniert vorzusehen, wobei die Anzahl der Radare sich richtet nach der Anzahl der Zähne pro Schaufel, die von Schaufel zu Schaufel gleich ist.

Die Erfindung richtet sich weiterhin auf ein Verfahren zur Bestimmung des Verschleißes eines abtragenden Elementes an den Schaufeln eines Schaufelrades eines Schaufelradgerätes, wobei mit einer ruhend am Schaufelradgerät angeordneten Aufnahmeeinheit Messsignale ausgesendet und/oder empfangen werden, mit welchen die minimalen Abstände von einem Abstandssensor der Aufnahmeeinheit bis zum abtragendem Element für jede Schaufel nach einer voller Schaufelradumdrehung detektiert werden und wobei daraus der Verschleiß der abtragenden Elemente während einer Bewegung im Betrieb der abtragenden Elemente bewertet wird. Das Verfahren beruht dabei zunächst auf der Aufnahme einer Schaufel und der Messung des Verschleißes wenigstens eines abtragenden Elementes an der Schaufel, insbesondere mit einer Kamera und mit einem Radar, wobei die Aufnahmeeinheit mit einer Auslöseeinheit gekoppelt ist, und wobei die Auslöseeinheit einen Drehgeber umfasst, mit dem eine rotatorische Position jeder Schaufel des Schaufelrades bestimmt wird und wobei der mit der Aufnahmeeinheit aufgenommene Film und/oder die aufgenommenen diskreten Lichtbilder den Schaufeln zugeordnet werden. Die Auslöseeinheit besteht dabei aus den Drehgebern, wobei jede andere Form eines solchen Positionsgebers ebenfalls möglich ist, über den die exakte rotatorische Position jeder Schaufel zu der Aufnahmeeinheit bestimmt wird.

Ein weiterer Vorteil wird erreicht, wenn in wenigstens einer der mehreren Elementreihen der abtragenden Elemente eine oder mehrere Markierungen zwischen zwei benachbarten Elementen, also beispielsweise auf einem Schaufelrücken, eingebracht sind. Mit einer Erkennung der Markierungen mittels des Abstandssensors und/oder mittels der Kamera besteht die Möglichkeit, insbesondere als Alternative zur Verwendung des Drehgebers, zu bestimmen, auf welcher Schaufel sich das jeweils gemessene abtragende Element befindet. Folglich kann als Alternative zu einem Drehgeber zur Bestimmung der Drehposition des Schaufelrades beispielsweise eine Fahne auf einem Schaufelrücken so platziert werden, dass die Fahne mittels des Radarsensors erfasst wird und zur Erkennung einer vollen Umdrehung des Schaufelrades genutzt wird. Die Markierung darf dabei die Abstandsmessung bis zur abtragenden Elementen nicht beeinflussen. Ab der erkannten Markierung wird jeder minimale Abstandswert der Schaufelanzahl des Schaufelrades durchnummeriert und somit der jeweiligen Schaufel zugeordnet.

Eine bevorzugte Ausführungsform kann vorsehen, dass die Kamera gekoppelt mit einer entsprechenden Erkennungseinheit die abtragenden Elemente per Mustererkennung selbst zuordnen kann, sodass durch die Mustererkennung die Schaufel selbst identifiziert werden kann, beispielsweise indem die absoluten Distanzen variieren oder die Reflexionen während des Passierens der abtragenden Elemente leicht variieren. Es ist somit möglich, jedes Abbild beziehungsweise jedes Sensorsignal und somit den Verschleißzustand der abtragenden Elemente der überwachten Schaufel mit dem überwachten Element selbst zuzuordnen.

Weiterhin ist eine Auswerteeinheit vorgesehen, insbesondere gekoppelt mit einer Ein-Ausgabeeinheit und mit einem Speicher, wobei das Verfahren vorsieht, dass der Film und/oder die aufgenommenen diskreten Lichtbilder in dem Speicher gespeichert werden und jedem abtragenden Element ein mit dem Radar ermittelter Verschleiß zugeordnet wird. Die Ermittlung des Verschleißes kann insbesondere so erfolgen, dass ein minimaler Abstand zwischen einer abtragenden Kontur des abtragenden Elementes und der Aufnahmeeinheit mit dem Radar gemessen wird, basierend auf dem der Verschleiß ermittelt wird.

Somit können die generierten Abbildungen zuerst auf dem digitalen Speicher übertragen werden und dort einem den Schaufeln und/oder Zähnen zugeordneten Ablageschemata gespeichert werden.

Ein Vorteil wird erreicht, wenn die Speicherung in Form eines Ringspeichers ausgebührt wird, um die Speicherkapazität gering zu halten. Die zeitlich jeweils auf einen oder mehrere Umläufe des Schaufelrades pro Zahn akkumulierten Werte können dann in einer Zeitreihe dargestellt werden und die Genauigkeit beziehungsweise die Ausreißer über die zeitlichen Mittelungen kann verbessert werden. Nach dem Speichervorgang beziehungsweise parallel dazu findet in der Auswerteeinheit die Bestimmung des Zahnverschleißzustandes statt. Die Bestimmung des Zahnverschleißzustandes kann damit kontinuierlich während des normalen Baggervorganges des Schaufelradgerätes in Echtzeit geschehen und es muss beispielsweise kein Sonderdurchlauf oder dergleichen vorgenommen werden. Damit wird die Effizienz des Schaufelradgerätes auch unter gleichzeitiger Ermittlung der Verschleißzustände der abtragenden Elemente, also insbesondere der Zähne, nicht verringert. Durch eine Radarsensorik, die das Radar umfasst, jedoch auch durch eine Lasersensorik oder eine Ultraschallsensorik wird der minimale Abstand zwischen dem auf dem Ausleger des Schaufelrades befestigen Sensor und dem Baggerzahn bestimmt. Die Position des Sensors wird folglich so ausgewählt, dass nur die bestimmte Zahnreihe eindeutig erfasst werden kann. Durch die Rotation des Schaufelrades "fliegen" die Baggerzähne förmlich periodisch an dem Sensor vorbei und erzeugen bei jedem Vorbeifliegen einen Abstandswerteverlauf. Durch die Bestimmung des minimalen Abstandes zu dem zu bewertenden Zahn kann die aktuelle Zahnlänge und damit der Zahnverschleißzustand ermittelt werden. Vergrößert sich der Abstand zwischen Sensor und Baggerzahn nach der Neuinstallation, liegt entsprechender Zahnverschleiß vor.

Sobald das System mit dem ausgeführten Verfahren einen kritischen Verschleißzustand der abtragenden Elemente, also insbesondere der Zähne, detektiert hat, wird dies dem Operator und/oder einem Serviceteam gemeldet, damit der entsprechende Zahn bei der nächsten Wartung gezielt ersetzt wird. Um die Entscheidung zum Wechsel der abtragenden Elemente noch während des Baggervorgangs sicher zu treffen, ist eine Zustandsänderung über die letzten Minuten, Stunden oder Tage sinnvoll zu speichern. Diese Zustandsänderungen sollten aus den gespeicherten Daten durch die Servicemitarbeiter abrufbar sein, sodass bereits im Vorfeld entsprechende Vorkehrungen getroffen werden können.

### BEVORZUGTES AUSFÜHRUNGSBEISPIEL DER ERFINDUNG

Die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Darstellung eines Schaufelrades eines Schaufelradgerätes mit einem installierten System gemäß der Erfindung;
- Figur 2: die Ansicht einer Schaufel mit mehreren Zähnen sowie mit einer Aufnahmeeinheit,
- Figur 3: ein Diagramm, das einen Verlauf von Abständen von nacheinander an der Aufnahmeeinheit vorbeibewegten Zähnen in einem nicht verschlissenen (links) und in einem verschlissenen (rechts) Zustand zeigt und

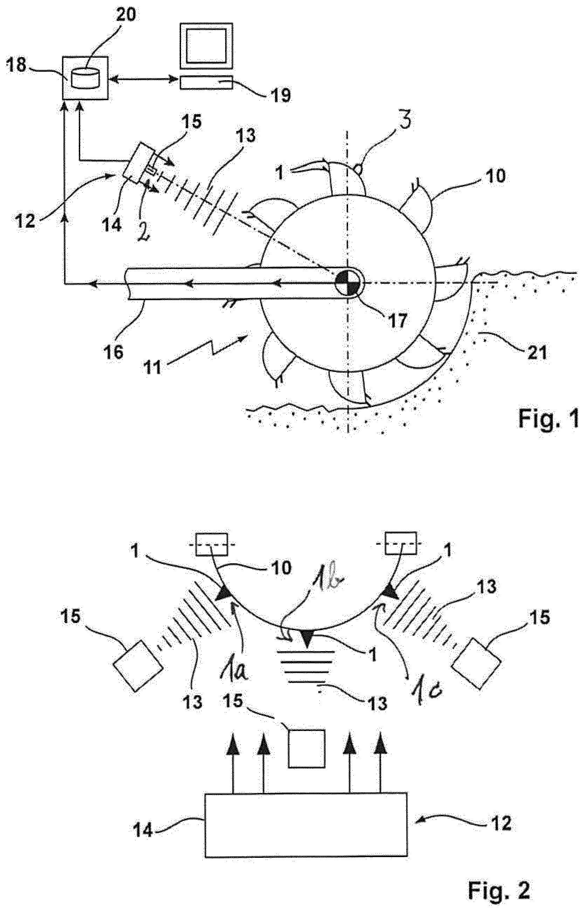

In Figur 1 ist in einer schematischen Darstellung ein Schaufelrad 11 eines Schaufelradgerätes gezeigt, das sich in Eingriff mit einem Gebirgsverband 21 befindet. Am Schaufelrad 11 sind auf dem Umfang verteilt mehrere Schaufeln 10 angeordnet, und jede Schaufel 10 weist mehrere abtragende Elemente 1 auf, die durch an der Vorderkante der Schaufel 10 angeordnete Zähne gebildet sind. Das Schaufelrad 11 ist an einem Auslegerarm 16 aufgenommen, wobei der Auslegerarm 16 ein Strukturbestandteil des Schaufelradgerätes ist.

Das System zur Bestimmung des Verschleißes der abtragenden Elemente 1 an den Schaufeln 10 umfasst eine Aufnahmeeinheit 12, die in einer Position in der Rotationsebene des Schaufelrades 11 angeordnet ist und einen radialen Abstand zu den Schaufeln 10 aufweist. Der radiale Abstand beträgt beispielsweise etwa 1m bis 2m. die Aufnahmeeinheit 12 umfasst eine Kamera 14, mit der ein Film oder mit der diskrete Lichtbilder der Schaufel 10 und damit auch der abtragenden Elemente 11 aufgenommen werden kann. Weiterhin weist die Aufnahmeeinheit 12 ein Radar 15 auf, mit dem der minimale Abstand zwischen einer abtragenden Kontur der abtragenden Elemente und dem Radar 15 gemessen werden kann. Hierzu dienen Messsignale 13, die beispielsweise durch die Radarstrahlen gebildet sind. Das Radar 15 kann insbesondere auch lediglich durch eine Radarantenne gebildet sein, wobei die eigentliche Radareinheit nicht zwingend Bestandteil der Aufnahmeeinheit 12 sein muss. Alternativ zur Anordnung eines Radars 15 kann auch eine Wärmebildkamera, ein Lasersensor oder ein Ultraschallsensor Verwendung finden. Die Aufnahmeeinheit 12 kann in nicht näher gezeigter Weise beispielsweise am Auslegerarm 16 des Schaufelradgerätes befestigt sein.

Das System umfasst weiterhin eine Auswerteeinheit 18, eine Ein- und Ausgabeeinheit 19 sowie einen Speicher 20. Darüber hinaus ist ein Drehgeber 17 in der rotierenden Aufnahme des Schaufelrades 11 am Auslegerarm 16 vorgesehen, wobei die Aufnahmeeinheit 12 und der Drehgeber 17 drahtgebunden oder über eine drahtlose Verbindung mit der Auswerteeinheit 18 verbunden sind. Die Auswerteeinheit 18 kann Daten an die Ein- und Ausgabeeinheit übermitteln, wobei auch über die Ein- und Ausgabeeinheit Daten an die Auswerteeinheit 18 übermittelt werden können, beispielsweise indem eine Person das System mit der Ein- und Ausgabeeinheit 19 bedient.

Auf dem Rücken einer Schaufel 10 ist eine Markierung 3 angeordnet, die als Fahne ausgebildet ist und die von der Aufnahmeeinheit 12 erfasst werden kann. Damit kann eine Alternative zum Drehgeber 17 geschaffen werden, da die Markierung 3 von der Aufnahmeeinheit 12 erkannt und mittels eines Durchnummerierens der mehreren Schaufeln 10 eine Bestimmung einer jeweiligen Schaufel 10 erfolgend kann, sodass jede einzelne Schaufel 10 vor und nach der Schaufel 10 mit der Markierung 3 bestimmbar ist.

Figur 2 zeigt in einer ebenfalls schematischen Ansicht eine Schaufel 10 mit beispielhaft drei an der Schaufel 10 angeordneten abtragenden Elementen 1, die sich in Elementenreihen 1a, 1b und 1c auf den mehreren hintereinander liegenden Schaufeln 10 befinden. In einem gewissen Abstand zur einen gezeigten Schaufel 10 befindet sich eine Aufnahmeeinheit 12, umfassend eine Kamera 14 und mehrere Radare 15. Die Aufnahmeeinheit 12 weist dabei lediglich eine Kamera 14 auf, wobei die Anzahl der Radare 15 übereinstimmt mit der Anzahl der abtragenden Elemente 1 an der Schaufel 10. Jedes abtragende Element 1 wird mit einem separaten Radar 15 ausgemessen, indem das jeweilige Radar 15 Messsignale 13 in Richtung zum abtragenden Element 1 aussendet. Die Vorderkante der abtragenden Elemente 1 bilden dabei die abtragenden Konturen. Verschleißen diese, so nimmt der Abstand der Spitze der abtragenden Elemente 1 zu den Radaren 15 zu, da Material von den abtragenden Elementen 1 abrasiv abgetragen wird. Auch das Fehlen eines abtragenden Elementes 1 führt zu einer erheblichen Vergrößerung der Messstrecke zwischen einer äußeren abtragenden Kontur der Schaufel 10 und dem Radar 15.

Wird das Schaufelradgerät betrieben und rotiert das Schaufelrad 11, so bewegen sich periodisch aufeinander folgend die Schaufeln 10 an der Aufnahmeeinheit 12 vorbei. Wird mit der Kamera 14 ein Film aufgenommen, so kann mit dem aufgenommenen Film ein kontinuierlicher Stream bereitgestellt werden, der die periodisch an der Aufnahmeeinheit 12 vorbeibewegten Schaufeln 10 zeigt, wobei jede Schaufel 10 beispielsweise durch eine entsprechende Bilderkennung als diskretes Bild abgespeichert werden kann. Zugehörig zu der entsprechenden Schaufel 10 werden die Verschleißzustände der abtragenden Elemente 1 mit den Radaren 15 aufgenommen, und die so erfassten Verschleißdaten der abtragenden Elemente 1 werden mit einer nicht gezeigten Auslöseeinheit der jeweiligen Schaufel 10 zugeordnet und beispielsweise im Speicher 20 der Auswerteeinheit 18 abgespeichert. Dabei kann die Identifikation der jeweiligen Schaufel 10 über die absolute Drehposition des Drehgebers 17 erfolgen, oder die Kamera 14 ermöglicht mit einem entsprechenden zugehörigen Modul eine Bilderkennung, sodass über eine Mustererkennung basierend auf absoluten Distanzen oder auf Reflexionen die Schaufel 10 auch ohne Drehgeber 17 identifiziert werden kann, zu der die entsprechenden abtragenden Elemente 1 mit dem Radar 15 ausgemessen wurden.

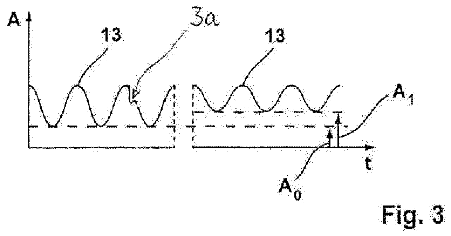

Figur 3 zeigt hierzu einen Messschrieb am Beispiel von aufeinander folgend an einem Radar 15 vorbeibewegten Zähnen, die die abtragenden Elemente 1 bilden und die sich an der immer gleichen Stelle an den aufeinander folgenden Schaufeln 10 befinden. Der Abstand A ist dabei aufgetragen über der Zeit t und die wiederkehrende Abstandsmessung zeigt aufeinander folgende Schaufeln mit einem jeweiligen abtragenden Element 1, das sich an der immer gleichen Stelle der Schaufeln 10 befindet. Das dargestellte Messsignal 13 zeigt dabei beginnend zunächst einen unverschlissenen Zustand der abtragenden Elemente 1, sodass der Abstand beim Durchlauf der abtragenden Elemente 1 durch den Messpunkt der Radare 15 eine große Amplitude zeigt, dargestellt durch den minimalen Abstand A0, der vergleichsweise klein ausfällt. Darauf folgend ist ein Messsignal aufgetragen, das eine kleinere Amplitude zeigt, die mit A1 gekennzeichnet ist. Die damit gezeigten verschlissenen abtragenden Elemente weisen einen größeren Abstand A1 zum aufnehmenden Radar 15 auf, woraus erkannt werden kann, dass ein baldiger Austausch der abtragenden Elemente 1 erforderlich ist.

Das Diagramm zeigt ferner beispielhaft den Signalverlauf mit einer Markierungsstelle 3a, die bei einer Erkennung der Markierung 3 gemäß Fig. 1 im Signalverlauf erzeugt wird. Damit ist jeder Wellenberg im Signalverlauf einem abtragenden Element 1 einer bestimmten Schaufel 10 zuordenbar. Sobald das System einen kritischen Verschleißzustand detektiert hat, wird dies einem Bediener eines Schaufelradgerätes oder einem Serviceteam gemeldet, sodass entsprechende abtragende Elemente 1 ausgetauscht werden können. Der dargestellte Messschrieb gemäß Figur 3 kann dabei für jedes abtragende Element 1 einer jeden Schaufel 10 aufgenommen werden und die Entscheidung zum Wechsel der abtragenden Elemente kann noch während des laufenden Baggervorgangs sicher getroffen werden. Insbesondere kann über den Messschrieb der Messsignale 13 eine Zustandsänderung der letzten Minuten, Stunden oder Tage erfasst werden, sodass aus dieser und den damit gespeicherten Daten für einen Service eine Information abgeleitet werden kann, wann welcher Zahn ausgetauscht werden muss. Durch die Messung während des Baggerbetriebs wird dadurch die Effizienz des Schaufelradgerätes nicht beeinträchtigt.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste

- 1: abtragendes Element
- 1a: Elementreihe
- 1b: Elementreihe
- 1c: Elementreihe
- 2: Abstandssensor
- 3: Markierung
- 3a: Markierungsstelle

- 10: Schaufel
- 11: Schaufelrad
- 12: Aufnahmeeinheit
- 13: Messsignal
- 14: Kamera
- 15: Radar
- 16: Auslegerarm
- 17: Drehgeber
- 18: Auswerteeinheit
- 19: Ein- Ausgabeeinheit
- 20: Speicher
- 21: Gebirgsverband

- A: Abstand
- A0: Abstand bei nicht verschlissener abtragender Kontur
- A1: Abstand bei verschlissener abtragender Kontur
- t: Zeit

## Patentansprüche

1. Schaufelradgerät mit einem System zur Bestimmung des Verschleißes abtragender Elemente (1), die an den Schaufeln (10) eines Schaufelrades (11) des Schaufelradgerätes angeordnet sind, umfassend wenigstens eine ruhend am Schaufelradgerät angeordnete Aufnahmeeinheit (12), mit der Messsignale (13) aussendbar und/oder empfangbar sind und mit welchen der Verschleiß der abtragenden Elemente (1) während einer Bewegung der abtragenden Elemente (1) während des Betriebes messbar ist, **dadurch gekennzeichnet dass** das System einen Drehgeber (17) umfasst, wobei mit dem Drehgeber (17) die rotatorische Position des Schaufelrades (11) erfassbar ist.

2. Schaufelradgerät nach Anspruch 1, **dadurch gekennzeichnet, dass** die Aufnahmeeinheit (12) wenigstens eine Kamera (14) umfasst, mit der ein Film und/oder diskrete Licht- und/oder Wärmebilder der Schaufeln (10) und/oder der abtragenden Elemente (1) erzeugbar sind.

3. Schaufelradgerät nach Anspruch 1 oder 2, **dadurch gekennzeichnet, dass** die Aufnahmeeinheit (12) wenigstens einen Abstandssensor (2) umfasst, mit dem ein minimaler Abstand (A) zwischen einem sich am nächsten zum Abstandssensor (2) befindlichen abtragenden Element (1) aus einer Elementenreihe (1a,1b,1c) am Schaufelrad (11) und dem Abstandssensor (2) messbar ist.

4. Schaufelradgerät nach Anspruch 3, **dadurch gekennzeichnet, dass** die Aufnahmeeinheit (12) ein Radar (15) oder wenigstens eine Radarantenne umfasst.

5. Schaufelradgerät nach Anspruch 4, **dadurch gekennzeichnet, dass** eine Aufnahmeeinheit (12) mehrere Abstandssensoren (2) und insbesondere mehrere Radare (15) aufweist, die jeweils auf eine entsprechende Elementreihe (1a, 1b, 1c) ausgerichtet sind.

6. Schaufelradgerät nach einem der Ansprüche 3 bis 5, **dadurch gekennzeichnet, dass** der Abstandssensor (2) dazu ausgebildet ist, mit einer Messrate von mehr als 20Hz, bevorzugt mehr als 50Hz und besonders bevorzugt mit 500Hz bis 2000Hz zu messen.

7. Schaufelradgerät nach einem der Ansprüche 4 oder 5 oder Anspruch 6 in Kombination mit einem der Ansprüche 4 oder 5, **dadurch gekennzeichnet, dass**
- eine Signalfrequenz des Radars (15) mehr als 24GHz und bevorzugt mehr als 70GHz beträgt und/oder dass
- das Radar (15) eine Bandbreite von mehr als 1GHz und bevorzugt zwischen 5GHz und 20GHz aufweist und/oder dass
- das Radar (15) über eine Frequenzmodulierung verfügt.

8. Schaufelradgerät nach einem der Ansprüche 4 bis 6 oder Anspruch 7 in Kombination mit einem der Ansprüche 4 bis 6, **dadurch gekennzeichnet, dass** die Ausbreitungsrichtung der Messsignale (13) zu einer Verschleißebene an dem gemessenen abtragenden Element (1) eine Flächennormale bildet, sodass die Abstandssensoren (2) entweder senkrecht oder angeschrägt auf eine Rotationsachse des Schaufelrades (11) hin weisend ausgerichtet sind.

9. Schaufelradgerät nach einem der vorgenannten Ansprüche, **dadurch gekennzeichnet, dass** das Schaufelradgerät einen Auslegerarm (16) zur Aufnahme des Schaufelrades (11) aufweist, wobei die Aufnahmeeinheit (12) wenigstens mittelbar am Auslegerarm (16) angeordnet ist.

10. Schaufelradgerät nach einem der vorgenannten Ansprüche, **dadurch gekennzeichnet, dass** ein Drehgeber (17) vorhanden ist, mit dem die rotatorische Position des Schaufelrades (11) erfassbar ist.

11. Schaufelradgerät nach Anspruch 3 oder nach einem der Ansprüche 4 bis 10 in Kombination mit Anspruch 3, **dadurch gekennzeichnet, dass** in wenigstens einer der mehreren Elementreihen (1a, 1b, 1c) der abtragenden Elemente (1) eine oder mehrere Markierungen (3) zwischen zwei benachbarten Elementen (1) eingebracht sind.

12. Verfahren zur Bestimmung des Verschleißes abtragender Elemente (1) an den Schaufeln (10) eines Schaufelrades (11) eines Schaufelradgerätes, wobei mit einer ruhend am Schaufelradgerät angeordneten Aufnahmeeinheit (12) Messsignale (13) ausgesendet und/oder empfangen werden, mit welchen die minimalen Abstände (A) von einem Abstandssensor (15) bis zum abtragenden Element (1) für jede Schaufel (10) nach einer vollen Schaufelradumdrehung detektiert werden und wobei daraus der Verschleiß der abtragenden Elemente (1) während einer Bewegung im Betrieb der abtragenden Elemente (1) bewertet wird, **dadurch gekennzeichnet dass** mit einer Auslöseeinheit umfassend einen Drehgeber (17) eine rotatorische Position jeder Schaufel (10) des Schaufelrades (11) bestimmt wird.

13. Verfahren nach Anspruch 12, **dadurch gekennzeichnet, dass** basierend auf der rotatorischen Position der mit der Aufnahmeeinheit (12) aufgenommene Film und/oder die aufgenommenen diskreten Licht- und oder Wärmebilder den jeweiligen Schaufeln (10) zugeordnet werden.

14. Verfahren nach Anspruch 12 oder 13, **dadurch gekennzeichnet, dass** mit einer Auswerteeinheit (18) umfassend eine Ein- Ausgabeeinheit (19) und einen Speicher (20) der Film und/oder die aufgenommenen diskreten Licht- und/oder Wärmebilder in dem Speicher (20) gespeichert werden und jedem abtragenden Element (1) jeder Elementreihe (1a, 1b, 1c) ein mit dem Abstandssensor (2) ermittelter Verschleißwert zugeordnet wird.

## Claims

1. Bucket wheel device with a system for determining the wear of material-removing elements (1) which are arranged on the blades (10) of a bucket wheel (11) of the bucket wheel device, comprising at least one recording unit (12), which is arranged resting on the bucket wheel device and by means of which measurement signals (13) can be transmitted and/or received, and can be used to measure the wear of the material-removing elements (1) during a movement of the material-removing elements (1) during operation, **characterized in that** the system comprises a rotary transducer (17), wherein the rotational position of the bucket wheel (11) can be detected by the rotary transducer (17).

2. Bucket wheel device according to Claim 1, **characterized in that** the recording unit (12) comprises at least one camera (14), with which a film and/or discrete optical and/or thermal images of the blades (10) and/or of the material-removing elements (1) can be produced.

3. Bucket wheel device according to Claim 1 or 2, **characterized in that** the recording unit (12) comprises at least one distance sensor (2), with which a minimum distance (A) between a material-removing element (1) that is closest to the distance sensor (2) from a row of elements (1a, 1b, 1c) on the bucket wheel (11) and the distance sensor (2) can be measured.

4. Bucket wheel device according to Claim 3, **characterized in that** the recording unit (12) comprises a radar unit (15) or at least a radar antenna.

5. Bucket wheel device according to Claim 4, **characterized in that** a recording unit (12) has a number of distance sensors (2) and in particular a number of radar units (15), which are respectively aligned with a corresponding row of elements (1a, 1b, 1c).

6. Bucket wheel device according to one of Claims 3 to 5, **characterized in that** the distance sensor (2) is designed to measure at a measuring rate of more than 20 Hz, preferably more than 50 Hz and particularly preferably at 500 Hz to 2000 Hz.

7. Bucket wheel device according to either of Claims 4 and 5, or Claim 6 in combination with either of Claims 4 and 5, **characterized in that**
- a signal frequency of the radar unit (15) is more than 24 GHz and preferably more than 70 GHz and/or in that
- the radar unit (15) has a bandwidth of more than 1 GHz and preferably between 5 GHz and 20 GHz and/or in that
- the radar unit (15) has a frequency modulation.

8. Bucket wheel device according to one of Claims 4 to 6, or Claim 7 in combination with one of Claims 4 to 6, **characterized in that** the direction of propagation of the measurement signals (13) forms a surface normal to a wear plane at the measured material-removing element (1), so that the distance sensors (2) are aligned either perpendicularly or angled towards an axis of rotation of the bucket wheel (11).

9. Bucket wheel device according to one of the preceding claims, **characterized in that** the bucket wheel device has a boom (16) for receiving the bucket wheel (11), wherein the recording unit (12) is arranged at least indirectly on the boom (16).

10. Bucket wheel device according to one of the preceding claims, **characterized in that** there is a rotary transducer (17), with which the rotational position of the bucket wheel (11) can be detected.

11. Bucket wheel device according to Claim 3 or one of Claims 4 to 10 in combination with Claim 3, **characterized in that** one or more markings (3) are provided between two adjacent elements (1) in at least one of the number of rows of elements (1a, 1b, 1c) of the material-removing elements (1).

12. Method for determining the wear of material-removing elements (1) on the blades (10) of a bucket wheel (11) of a bucket wheel device, wherein measurement signals (13) are transmitted and/or received by a recording unit (12), which is arranged resting on the bucket wheel device, and is used to detect the minimum distances (A) from a distance sensor (15) to the material-removing element (1) for each bucket (10) after a full revolution of the bucket wheel, and wherein this is used to assess the wear of the material-removing elements (1) during a movement in the operation of the material-removing elements (1), **characterized in that** a rotational position of each blade (10) of the bucket wheel (11) is determined by a triggering unit comprising a rotary transducer (17) .

13. Method according to Claim 12, **characterized in that**, on the basis of the rotational position, the film recorded by the recording unit (12) and/or the recorded discrete optical and/or thermal images are assigned to the respective blades (10).

14. Method according to Claim 12 or 13, **characterized in that**, with an evaluation unit (18) comprising an input/output unit (19) and a memory (20), the film and/or the recorded discrete optical and/or thermal images are stored in the memory (20) and each material-removing element (1) of each row of elements (1a, 1b, 1c) is assigned a wear value determined by the distance sensor (2).

## Revendications

1. Engin à roue à godets, comprenant un système permettant de déterminer l'usure d'éléments d'excavation (1) qui sont disposés sur les godets (10) d'une roue à godets (11) de l'engin à roue à godets, comprenant au moins une unité d'enregistrement (12) disposée de manière stationnaire sur l'engin à roue à godets, permettant d'émettre et/ou de recevoir des signaux de mesure (13) et qui permettent de mesurer l'usure des éléments d'excavation (1) pendant un mouvement des éléments d'excavation (1) en cours de fonctionnement,
**caractérisé en ce que** le système comprend un encodeur rotatif (17), l'encodeur rotatif (17) permettant de détecter la position de rotation de la roue à godets (11).

2. Engin à roue à godets selon la revendication 1, **caractérisé en ce que** l'unité d'enregistrement (12) comprend au moins une caméra (14) qui permet de produire un film et/ou des photographies et/ou images thermiques discrètes des godets (10) et/ou des éléments d'excavation (1).

3. Engin à roue à godets selon la revendication 1 ou 2, **caractérisé en ce que** l'unité d'enregistrement (12) comprend au moins un capteur de distance (2) qui permet de mesurer une distance minimale (A) entre un élément d'excavation (1) le plus proche du capteur de distance (2) d'une série d'éléments (1a, 1b, 1c) sur la roue à godets (11) et le capteur de distance (2).

4. Engin à roue à godets selon la revendication 3, **caractérisé en ce que** l'unité d'enregistrement (12) comprend un radar (15) ou du moins une antenne de radar.

5. Engin à roue à godets selon la revendication 4, **caractérisé en ce qu'**une unité d'enregistrement (12) présente plusieurs capteurs de distance (2) et en particulier plusieurs radars (15) qui sont respectivement alignés sur une série d'éléments (1a, 1b, 1c) correspondante.

6. Engin à roue à godets selon l'une quelconque des revendications 3 à 5, **caractérisé en ce que** le capteur de distance (2) est réalisé pour mesurer avec une fréquence de mesure supérieure à 20 Hz, de préférence supérieure à 50 Hz et de manière particulièrement préférée de 500 Hz à 2000 Hz.

7. Engin à roue à godets selon l'une quelconque des revendications 4 ou 5 ou la revendication 6 en combinaison avec l'une quelconque des revendications 4 ou 5, **caractérisé en ce que**
- une fréquence de signal du radar (15) est supérieure à 24 GHz et de préférence supérieure à 70 GHz, et/ou **en ce que**
- le radar (15) présente une bande passante supérieure à 1 GHz et de préférence entre 5 GHz et 20 GHz, et/ou **en ce que**
- le radar (15) dispose d'une modulation de fréquence.

8. Engin à roue à godets selon l'une quelconque des revendications 4 à 6 ou la revendication 7 en combinaison avec l'une quelconque des revendications 4 à 6, **caractérisé en ce que** la direction de propagation des signaux de mesure (13) par rapport à un plan d'usure sur l'élément d'excavation (1) mesuré constitue une normale à la surface de sorte que les capteurs de distance (2) sont alignés en étant tournés de manière perpendiculaire ou inclinée vers un axe de rotation de la roue à godets (11).

9. Engin à roue à godets selon l'une quelconque des revendications précédentes, **caractérisé en ce que** l'engin à roue à godets présente un bras de console (16) pour recevoir la roue à godets (11), l'unité d'enregistrement (12) étant disposée au moins indirectement sur le bras de console (16).

10. Engin à roue à godets selon l'une quelconque des revendications précédentes, **caractérisé en ce qu'**un encodeur rotatif (17) est présent qui permet de détecter la position de rotation de la roue à godets (11) .

11. Engin à roue à godets selon la revendication 3 ou selon l'une quelconque des revendications 4 à 10 en combinaison avec la revendication 3, **caractérisé en ce que** dans au moins l'une des plusieurs séries d'éléments (1a, 1b, 1c) des éléments d'excavation (1), un ou plusieurs repères (3) sont introduits entre deux éléments voisins (1).

12. Procédé permettant de déterminer l'usure d'éléments d'excavation (1) sur les godets (10) d'une roue à godets (11) d'un engin à roue à godets, dans lequel une unité d'enregistrement (12) disposée de manière stationnaire sur l'engin à roue à godets émet et/ou reçoit des signaux de mesure (13) à l'aide desquels les distances minimales (A) d'un capteur de distance (15) à l'élément d'excavation (1) sont détectées pour chaque godet (10) après un tour complet de la roue à godets, et dans lequel sur cette base, l'usure des éléments d'excavation (1) pendant un mouvement en fonctionnement des éléments d'excavation (1) est évaluée, **caractérisé en ce qu'**une unité de déclenchement comprenant un encodeur rotatif (17) détermine une position de rotation de chaque godet (10) de la roue à godets (11).

13. Procédé selon la revendication 12, **caractérisé en ce que** sur la base de la position de rotation, le film enregistré par l'unité d'enregistrement (12) et/ou les photographies et/ou images thermiques discrètes enregistrées sont associés aux godets (10) respectifs.

14. Procédé selon la revendication 12 ou 13, **caractérisé en ce qu'**une unité d'évaluation (18) comprenant une unité d'entrée/sortie (19) et une mémoire (20) mémorise le film et/ou les photographies et/ou images thermiques discrètes enregistrées dans la mémoire (20) et associe à chaque élément d'excavation (1) de chaque série d'éléments (1a, 1b, 1c) une valeur d'usure déterminée par le capteur de distance (2).
